# EUROPÄISCHE PATENTSCHRIFT

(11) **EP 1 864 053 B1**
(45) Veröffentlichungstag und Bekanntmachung des Hinweises auf die Patenterteilung: **18.09.2019**
(21) Anmeldenummer: 06722724.9
(22) Anmeldetag: 31.03.2006
(51) Int. Cl.: B60Q 1/11, B60Q 1/12, B60Q 1/124, F21S 41/141, F21S 41/143, F21S 41/62, F21S 41/657, F21S 41/663, F21S 41/32, F21S 41/63, F21Y 115/10

(54) **KFZ-SCHEINWERFER**
MOTOR VEHICLE HEADLIGHT
PHARE DE VEHICULE

(30) Priorität: 31.03.2005 DE 102005014754
(43) Veröffentlichungstag der Anmeldung: 12.12.2007
(73) Patentinhaber: OSRAM GmbH, 80807 München (DE)
(72) Erfinder: REINERS, Thomas, 89429 Bachhagel (DE); VOLLMER, Ralf, 89522 Heidenheim (DE); WILM, Alexander, 93059 Regensburg (DE)
(74) Vertreter: Raiser, Franz
(86) Internationale Anmeldenummer: PCT/DE2006/000573
(87) Internationale Veröffentlichungsnummer: WO 2006/102882

(56) Entgegenhaltungen:
- WO-A-2004/088200
- DE-A1- 19 803 987
- US-A1- 2004 246 739
- US-B1- 6 601 982

## Beschreibung

Die Druckschrift US 6,601,982 B2 beschreibt einen Kfz-Scheinwerfer. Das Dokument WO2004/088200 beschreibt einen Kfz-Scheinwerfer mit verschiedenen Modulen, Leuchtdiodenchips und Moduloptiken. Es offenbart einen Scheinwerfer nach dem Oberbegriff des Anspruchs 1.

Eine zu lösende Aufgabe besteht darin, einen besonders langlebigen Kfz-Scheinwerfer anzugeben. Eine weitere zu lösende Aufgabe besteht darin, einen Kfz-Scheinwerfer anzugeben, der besonders vielseitig einsetzbar ist. Darüber hinaus ist es eine zu lösende Aufgabe, einen Kfz-Scheinwerfer mit besonders variabler Abstrahlcharakteristik anzugeben.

Erfindungsgemäß weist der Kfz-Scheinwerfer zumindest zwei Module zur Lichterzeugung auf. Das heißt, im Kfz-Scheinwerfer sind zumindest zwei Bauteile enthalten, die zur Lichterzeugung geeignet sind. Bei den Modulen kann es sich beispielsweise um einzelne Lichtquellen oder auch um Lichtquellen handeln, denen optische Elemente nachgeordnet sind.

Erfindungsgemäß weist jedes der Module zur Lichterzeugung eine Abstrahlcharakteristik auf. Unter Abstrahlcharakteristik eines Moduls ist dabei die räumliche Intensitäts- oder Helligkeitsverteilung des vom Modul abgegebenen Lichts zu verstehen. Zum Beispiel kann ein Modul eine kegelförmige Abstrahlcharakteristik aufweisen. Das bedeutet dann, dass die Flächen gleicher Intensität oder Helligkeit des vom Modul abgestrahlten Lichts im Raum einen Kegel bilden. Darüber hinaus sind viele weitere Formen der Abstrahlcharakteristik eines Moduls möglich.

Gemäß zumindest einer Ausführungsform des Kfz-Scheinwerfers ist die Abstrahlcharakteristik zumindest eines der Module des Scheinwerfers in einem dem Scheinwerfer zugeordneten Bezugssystem bewegbar. Unter einem dem Scheinwerfer zugeordneten Bezugssystem ist ein Bezugssystem zu verstehen, das mit dem Scheinwerfer fest verbunden ist. Teile des Scheinwerfers, wie etwa ein Scheinwerfergehäuse sind in diesem Bezugssystem ortsfest. Im Fall eines Kfz-Scheinwerfers kann das Bezugssystem beispielsweise auch fest mit der Karosserie des Kraftfahrzeugs verbunden sein.

Die Abstrahlcharakteristik des Moduls ist im dem Scheinwerfer zugeordneten Bezugssystem bewegbar. Bevorzugt ist die Abstrahlcharakteristik des Moduls in diesem Bezugssystem beispielsweise verschiebbar und/oder drehbar.

Bewegbar ist insbesondere so zu verstehen, dass die Abstrahlcharakteristik des Moduls in vorgebbarer Weise bewegt werden kann. Die Abstrahlcharakteristik des Moduls kann damit gezielt an die Einsatzerfordernisse des Scheinwerfers angepasst werden. Dies kann auch während einer Bewegung des gesamten Scheinwerfers - etwa bei fahrendem Kraftfahrzeug - geschehen. Damit kann durch die Bewegung der Abstrahlcharakteristik des Moduls beispielsweise auf eine bestimmte Verkehrssituation reagiert werden.

Gemäß zumindest einer Ausführungsform des Kfz-Scheinwerfers weist der Kfz-Scheinwerfer zumindest zwei Module zur Lichterzeugung auf, wobei die Abstrahlcharakteristik zumindest eines der Module in einem dem Scheinwerfer zugeordneten Bezugssystem bewegbar ist.

Gemäß zumindest einer Ausführungsform des Kfz-Scheinwerfers weisen Module des Kfz-Scheinwerfers voneinander verschiedene Abstrahlcharakteristika auf. Das heißt, zumindest zwei Module des Scheinwerfers sind geeignet, Licht mit voneinander unterschiedlichen Abstrahlcharakteristika zu erzeugen. Die Module unterschiedlicher Abstrahlcharakteristika sind zum Beispiel für unterschiedliche Verkehrssituationen und Fahrbedingungen vorgesehen. So kann ein Modul eine besonders enge Abstrahlcharakteristik aufweisen, bei der Licht auf einen relativ kleinen Winkelbereich im Raum konzentriert ist. Ein anderes Modul kann verglichen dazu eine breitere Abstrahlcharakteristik aufweisen, bei der ein größerer Winkelbereich im Raum ausgeleuchtet ist. Darüber hinaus kann der Scheinwerfer weitere Module anderer Abstrahlcharakteristika oder mehrere Module mit jeweils gleicher Abstrahlcharakteristik aufweisen.

Erfindungsgemäß überlagern sich die Ab-strahlcharakteristika von zumindest zwei der Module zu einer gemeinsamen Abstrahlcharakteristik des Kfz-Scheinwerfers. Das heißt, diese Module werden dann beispielsweise so betrieben, dass sie den Betrachter als gleichzeitig Licht emittierend erscheinen. Das kann dadurch erreicht sein, dass die Module gleichzeitig betrieben werden, sodass sie zu gleichen Zeiten Licht abstrahlen. Es ist aber auch möglich, dass die Module mit hohen Frequenzen getaktet abwechselnd betrieben werden. Die Abstrahlcharakteristika der einzelnen Module sind dabei bevorzugt derart ausgerichtet, dass sie sich zumindest stellenweise im Raum überschneiden und damit zumindest stellenweise überlagern. Das heißt, bevorzugt im Fernfeld, wenn der Abstand zwischen Betrachter und Scheinwerfer groß gegen beispielsweise die Abmessungen des Scheinwerfers ist, überlagern sich die Abstrahlcharakteristika der Module zu einer gemeinsamen Abstrahlcharakteristik des Scheinwerfers.

Der Kfz-Scheinwerfer macht sich dabei unter anderem die Idee zu Nutze, dass durch die Verwendung relativ weniger Module aufgrund der Überlagerung der Abstrahlcharakteristika der Module der Scheinwerfer an eine Vielzahl unterschiedlicher Verkehrs- und Fahrsituationen angepasst werden kann. Durch das Bewegen und Dimmen der Abstrahlcharakteristika der einzelnen Module sowie das Betreiben unterschiedlicher Module und das Überlagern der Abstrahlcharakteristika unterschiedlicher Module kann eine situationsangepasste Abstrahlcharakteristik des Scheinwerfers modelliert werden.

So kann die Abstrahlcharakteristik des Scheinwerfers beispielsweise den Wetterverhältnissen, der Umgebung (Stadt, Landstraße, Autobahn), den Beleuchtungsverhältnissen, Richtungsänderungen des Kraftfahrzeugs und/oder der Neigung des Kraftfahrzeugs angepasst sein. Ferner ist auch eine Anpassung daran möglich, ob das Fahrzeug im Rechts- oder Linksverkehr betrieben wird.

Gemäß zumindest einer Ausführungsform weist ein Modul des Scheinwerfers eine Lichtquelle und eine Moduloptik auf. Bevorzugt weist jedes Modul des Scheinwerfers eine Lichtquelle und eine Moduloptik auf. Die Moduloptik ist zum Beispiel ortsfest mit der Lichtquelle verbunden.

Die Moduloptik ist der Lichtquelle vorzugsweise derart nachgeordnet, dass zumindest ein Großteil des von der Lichtquelle abgestrahlten Lichts durch die Moduloptik tritt. Zumindest ein Teil des durchtretenden Lichts wird von der Moduloptik optisch beeinflusst. Bei der Moduloptik kann es sich etwa um lichtreflektierende, lichtbrechende oder eine Kombination dieser optischen Elemente handeln.

Bevorzugt ist die Moduloptik geeignet, die Divergenz des in die Moduloptik eintretenden Lichts beim Durchtritt durch die Optik zu verringern. Das heißt, das von der Lichtquelle emittierte Licht wird beispielsweise bei Durchtritt durch die Moduloptik derart beeinflusst, dass seine Divergenz nach dem Austritt geringer ist, als vor dem Eintritt in die Moduloptik. Besonders bevorzugt ist die Moduloptik darüber hinaus geeignet, eine vorgebbare Lichtverteilung des austretenden Lichts zu bewirken.

In zumindest einer Ausführungsform des Kfz-Scheinwerfers ist die Moduloptik dazu nach Art eines nicht-abbildenden optischen Konzentrators geformt. Dabei ist die Lichtquelle an der eigentlichen Lichtaustrittsfläche des optischen Konzentrators angeordnet. Von dort kann Licht von der Lichtquelle in den Konzentrator eingekoppelt werden, sodass der optische Konzentrator in umgekehrter Richtung durchstrahlt ist.

Die Moduloptik weist vorzugsweise Seitenflächen auf, die die Lichteintrittsfläche der Moduloptik, an der die Lichtquelle angeordnet ist, mit der Lichtaustrittsfläche verbinden. Bevorzugt weist die Lichteintrittsfläche eine kleinere Fläche als die Lichtaustrittsfläche auf. Zumindest ein Teil des durch die Lichteintrittsfläche eingekoppelten Lichts wird an den Seitenflächen reflektiert und auf diese Weise zur Lichtaustrittsfläche geführt. Die Form der Seitenflächen kann dabei so gewählt sein, dass an der Lichtaustrittsfläche oder in einer Ebene, die parallel zur Lichtaustrittsfläche verläuft, eine gewünschte Lichtdichteverteilung entsteht. Das heißt, Licht tritt an der Lichtaustrittsfläche nicht homogen über die gesamte Lichtaustrittsfläche verteilt aus, sondern es gibt Bereiche der Lichtaustrittsfläche, in denen die Lichtdichte größer ist, als in anderen Bereichen der Lichtaustrittsfläche. Auf diese Weise ist es möglich, eine gewünschte Abstrahlcharakteristik des Moduls zu modulieren. So kann schon auf der Lichtaustrittsfläche des Moduls beispielsweise ein besonders heller Bereich definiert sein, sowie ein deutlich ausgeprägter Hell-Dunkel-Übergang.

Erfmdungsgemäß ist die Moduloptik eines Moduls zumindest stellenweise nach Art wenigstens eines der folgenden optischen Elemente gebildet: Zusammengesetzter parabolischer Konzentrator (CPC - Compound Parabolic Concentrator), zusammengesetzter elliptischer Konzentrator (CEC - Compound Elliptic Concentrator), zusammengesetzter hyperbolischer Konzentrator (CHC - Compound Hyperbolic Concentrator). Das heißt, die Seitenflächen der Moduloptik sind zumindest stellenweise nach Art eines dieser optischen Elemente geformt.

Weiter ist es möglich, dass die Moduloptik zumindest stellenweise ebene Seitenflächen oder Seitenflächen eines Rotationskörpers aufweist. Auf diese Weise kann die Moduloptik zumindest stellenweise nach Art einer Pyramiden- oder Kegelstumpfoptik geformt sein.

Ferner können die Seitenflächen der Moduloptik Freiformflächen zum Beispiel mit Krümmungen höherer Ordnung enthalten.

Gemäß zumindest einer Ausführungsform des Kfz-Scheinwerfers enthält die Lichtquelle eines Moduls wenigstens einen Leuchtdiodenchip. Bevorzugt enthält die Lichtquelle mehrere Leuchtdiodenchips. Die Lichtquelle ist weiter bevorzugt geeignet, Licht abzustrahlen, das dem Betrachter weiß erscheint.

Im Zweifelsfall ist dazu die IEC-Definition von "Weiß" heranzuziehen.

Das heißt, die Lichtquelle enthält zum Beispiel Leuchtdiodenchips, deren abgestrahltes Licht sich zu weißem Licht mischt. Weiter ist es möglich, dass den Leuchtdiodenchips der lichtquelle ein Lumineszenzkonversionsmaterial nachgeordnet ist. Zumindest ein Teil der von den Leuchtdiodenchips emittierten elektromagnetischen Strahlung wird vom Lumineszenzkonversionsmaterial zu Licht einer anderen Wellenlänge konvertiert. Der nichtkonvertierte Anteil des von der Leuchtdiode abgegebenen Lichts sowie der frequenzkonvertierte Anteil mischen sich dann zu weißem Licht.

Bevorzugt ist jeder Leuchtdiodenchip geeignet, einen Lichtstrom von wenigstens 20 Im im Dauerbetrieb zu erzeugen. Erfindungsgemäß enthält die Lichtquelle mindestens vier Leuchtdiodenchips, sodass jedes Modul geeignet ist, einen Lichtstrom von wenigstens 100 Im im Dauerbetrieb zu erzeugen.

Erfindungsgemäß weist die Strahlungseintrittsöffnung der Moduloptik eine Querschnittsfläche auf, die maximal zwei mal so groß ist, wie die Gesamtstrahlungsauskoppelfläche der dem Modul zugeordneten Leuchtdiodenchips. Die Gesamtstrahlungsauskoppelfläche ist durch die Summe der Strahlungsauskoppelflächen der einzelnen dem Modul zugeordneten Leuchtdiodenchips gegeben. Bevorzugt ist die Fläche der Strahlungseintrittsöffnung maximal 1,5, besonders bevorzugt maximal 1,25 mal so groß wie die Gesamtstrahlungsauskoppelfläche der dem Modul zugeordneten Leuchtdiodenchips.

Eine derart kleine Lichteintrittsfläche erlaubt es, den Raumwinkel, in den das Licht emittiert wird, möglichst nahe an der Strahlungsauskoppelfläche der Leuchtdiodenchips zu verkleinern. Dort ist die Querschnittsfläche der von den Leuchtdiodenchips emittierten Strahlenkegel besonders klein. Dies ermöglicht die Konstruktion von Bauteilen mit optimiertem Etendue-Wert. Das heißt, eine möglichst hohe Strahlungsstärke wird auf eine möglichst kleine Fläche projiziert.

Gemäß zumindest einer Ausführungsform des Kfz-Scheinwerfers sind zumindest Teile eines Moduls des Kfz-Scheinwerfers in dem dem Scheinwerfer zugeordneten Bezugssystem be wegbar. Auf diese Weise kann erreicht sein, dass die Abstrahlcharakteristik des Moduls im Bezugssystem des Scheinwerfers bewegbar ist.

Die Bewegung des Moduls im Bezugssystem des Scheinwerfers kann Translationen und Rotationen des Moduls umfassen. Im Bezugssystem des Scheinwerfers bedeutet dabei - wie oben bereits erwähnt -, dass eine Bewegung relativ zu einem Teil des Scheinwerfers stattfindet, der in einem dem Scheinwerfer zugeordneten Bezugssystem ortsfest ist.

Beispielsweise ist das Modul also relativ zum Gehäuse des Scheinwerfers oder zur Karosserie des Kraftfahrzeuges, in dem sich der Scheinwerfer befindet, bewegbar.

Gemäß zumindest einer Ausführungsform des Kfz-Scheinwerfers ist das Modul drehbar gelagert. Das heißt, das Modul kann um wenigstens eine Achse, die beispielsweise durch das Modul hindurch verläuft, gedreht werden. Aufgrund der Drehung des Moduls erfolgt eine Bewegung der Abstrahlcharakteristik des Moduls im Bezugssystem des Scheinwerfers.

Erfindungsgemäß ist das Modul um drei zugeordnete Hauptachsen drehbar gelagert. Die drei Hauptachsen verlaufen dabei senkrecht zueinander und schneiden sich beispielsweise in einem Punkt des Moduls. Bevorzugt verläuft eine der Hauptachsen - die Längsachse des Moduls - parallel zur Hauptabstrahlrichtung des Moduls, das heißt, parallel zu der Richtung, in der Licht mit der größten Intensität durch die Lichtaustrittsfläche der Moduloptik tritt.

Gemäß zumindest einer Ausführungsform des Kfz-Scheinwerfers ist die Position der Moduloptik relativ zur Lichtquelle veränderbar. Zum Beispiel kann die Moduloptik relativ zur Lichtquelle verschiebbar oder drehbar sein. Auch auf diese Weise ist eine Bewegung der Abstrahlcharakteristik des Moduls möglich.

Gemäß zumindest einer Ausführungsform weist der Scheinwerfer einen Schrittmotor auf. Der Schrittmotor ist geeignet, die Abstrahlcharakteristik des Moduls definiert zu bewegen. Der Schrittmotor kann sowohl zur Drehung der Abstrahlcharakteristik um einstellbare Winkel, als auch zum Verschieben der Abstrahlcharakteristik um vorgegebene Strecken im dem Scheinwerfer zugeordneten Bezugssystem vorgesehen sein. Zum Beispiel kann ein Schrittmotor vorgesehen sein, um ein Modul des Scheinwerfers um eine Achse zu drehen. Weiter ist es möglich - gegebenenfalls unter Verwendung eines zusätzlichen Schrittmotors - die Moduloptik relativ zur Lichtquelle des Moduls zu drehen. Der Schrittmotor erlaubt dabei einen vorgebbaren Drehwinkel in mehreren Schritten anzufahren, falls der Drehwinkel ein Vielfaches des minimalen Drehwinkels des Schrittmotors ist. Bevorzugt beträgt der minimale Drehwinkel des Schrittmotors höchstens 1°.

Es ist darüber hinaus möglich, dass jedem Modul des Scheinwerfers mehrere Schrittmotoren zur Drehung um unterschiedliche Achsen zugeordnet sind.

Gemäß zumindest einer Ausführungsform des Kfz-Scheinwerfers enthält der Scheinwerfer ein Hebelsystem. Das Hebelsystem ist geeignet, die Abstrahlcharakteristik des Moduls definiert zu bewegen. Mittels des Hebelsystems können Rotation und Translation der Abstrahlcharakteristik relativ zu einem dem Scheinwerfer zugeordneten Bezugssystem bewirkt werden. Beispielsweise kann mittels eines Hebelsystems das Modul oder die Moduloptik relativ zur Lichtquelle gedreht werden.

Gemäß zumindest einer Ausführungsform des Scheinwerfers weist der Kfz-Scheinwerfer ein optisches Element auf, das dem Modul nachgeordnet ist. Beispielsweise kann allen Modulen ein gemeinsames optisches Element nachgeordnet sein. Bevorzugt ist das optische Element den Modulen derart nachgeordnet, dass zumindest ein Teil des von den Modulen abgestrahlten Lichts durch das optische Element tritt und von diesem beeinflusst wird.

Bevorzugt umfasst das optische Element eine Projektionslinse. Besonders bevorzugt liegt die Lichtaustrittsfläche zumindest eines der Module in der Fokalebene der Projektionslinse. Auf diese Weise kann die Lichtdichteverteilung auf oder an der Lichtaustrittsfläche der Moduloptik besonders scharf auf die zu beleuchtende Fläche abgebildet werden.

Gemäß zumindest einer Ausführungsform ist die Position zumindest eines der Module des Scheinwerfers relativ zur Projektionslinse veränderbar. Auf diese Weise kann beispielsweise die Strahlungsaustrittsfläche des Moduls oder Teile der Strahlungsaustrittsfläche des Moduls aus oder in die Fokalebene der Projektionslinse gefahren werden. Dadurch ist es beispielsweise möglich einen Hell-Dunkel-Übergang in der Projektion der Lichtdichteverteilung entsprechend gesetzlichen Vorschriften und/oder Designerfordernissen einzustellen. Dies ermöglicht eine weitere Anpassung der Abstrahlcharakteristik des Moduls an die Verkehrssituation und die Fahrbedingungen.

In folgendem wird der hier beschriebene Kfz-Scheinwerfer anhand von Ausführungsbeispielen und den dazugehörigen Figuren näher erläutert. In den Ausführungsbeispielen und Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.
- Figur 1: zeigt schematisch die Lichtstärkeverteilung der Projektion der Abstrahlcharakteristik eines Moduls nach einem ersten Ausführungsbeispiel.
- Figur 2: zeigt schematisch die Lichtstärkeverteilung der Projektion der Abstrahlcharakteristik eines Moduls nach einem zweiten Ausführungsbeispiel.
- Figur 3: zeigt schematisch die Lichtstärkeverteilung der Projektion der Abstrahlcharakteristik eines Moduls nach einem dritten Ausführungsbeispiel.
- Figur 4A: zeigt schematisch die Lichtstärkeverteilung der Projektion der Abstrahlcharakteristik eines Moduls nach einem vierten Ausführungsbeispiel.
- Figur 4B: zeigt die Projektion einer um die Längsachse gedrehten Abstrahlcharakteristik des Moduls nach dem vierten Ausführungsbeispiel.
- Figur 4C: zeigt die Projektion einer um die Längsachse gedrehten Abstrahlcharakteristik des Moduls nach dem vierten Ausführungsbeispiel.
- Figur 5A: zeigt schematisch die Lichtstärkeverteilung einer Überlagerung der Abstrahlcharakteristika der Module nach dem ersten und dem vierten Ausführungsbeispiel.
- Figur 5B: zeigt schematisch die Lichtstärkeverteilung einer Überlagerung der Abstrahlcharakteristika der Module nach dem zweiten und vierten Ausführungsbeispiel.
- Figur 5C: zeigt schematisch die Lichtstärkeverteilung einer Überlagerung der Abstrahlcharakteristika der Module nach dem zweiten, dritten und vierten Ausführungsbeispiel.
- Figur 5D: zeigt schematisch die Lichtstärkeverteilung einer Überlagerung der Abstrahlcharakteristika der Module nach dem dritten und zwei Modulen nach dem vierten Ausführungsbeispiel.
- Figuren 6A und 6B: zeigen eine schematische Lichtstärkeverteilung einer Überlagerung der Abstrahlcharakteristika der Module nach dem zweiten und dem vierten Ausführungsbeispiel.
- Figuren 7A und 7B: zeigen eine schematische Lichtstärkeverteilung einer Überlagerung der Abstrahlcharakteristika der Module nach dem zweiten und dem vierten Ausführungsbeispiel.
- Figuren 8A und 8B: zeigen ein Hebelsystem zur Drehung eines Moduls um die Längsachse.
- Figur 9: zeigt eine schematische Perspektivskizze eines Moduls.
- Figur 10A: zeigt eine schematische Perspektivskizze eines ersten Ausführungsbeispiels einer Moduloptik.
- Figur 10B: zeigt eine schematische Schnittdarstellung des ersten Ausführungsbeispiels einer Moduloptik.
- Figur 11A: zeigt eine schematische Perspektivskizze eines zweiten Ausführungsbeispiels einer Moduloptik.
- Figur 11B: zeigt eine schematische Schnittdarstellung des zweiten Ausführungsbeispiels einer Moduloptik.
- Figur 12A: zeigt eine schematische Perspektivskizze eines Ausführungsbeispiels der Lichtquelle des Moduls.
- Figur 12B: zeigt eine schematische Perspektivskizze des Ausführungsbeispiels der Lichtquelle des Moduls mit Moduloptik.
- Figur 13: zeigt eine schematische Perspektivskizze eines Scheinwerfers mit Modul und optischem Element.

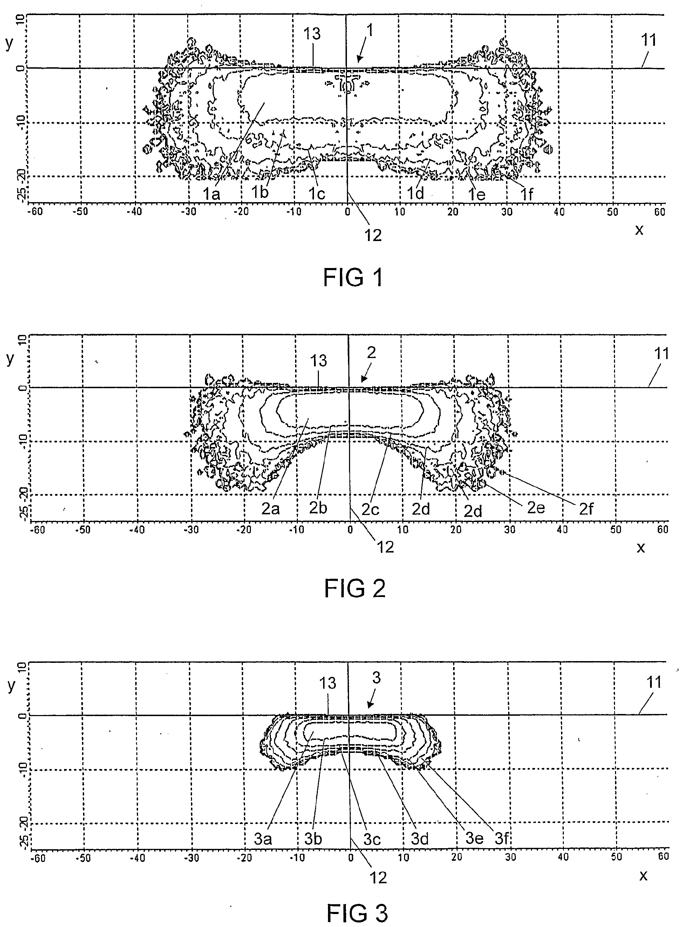

Die Figuren 1 bis 4 zeigen die Lichtstärkeverteilung verschiedener Ausführungsbeispiele der Module zur Lichterzeugung. Die Lichtstärkeverteilung ergibt sich beispielsweise durch Beleuchtung eines Messschirms mit von den Modulen abgegebenem Licht.

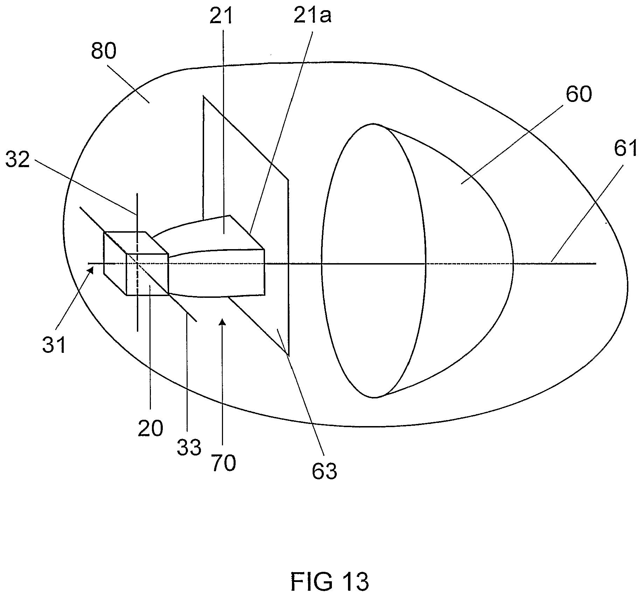

Der Messschirm befindet sich beispielsweise in einem großen Abstand vor dem Scheinwerfer in dem das Modul integriert ist. Die Ebene des Messschirms verläuft senkrecht zur optischen Achse 61 einer den Modulen nachgeordneten Projektionslinse 60 (vergleiche dazu Figur 13). Das heißt, die gezeigte Lichtstärkeverteilung ist eine ebene Projektion der Abstrahlcharakteristik des jeweiligen Moduls oder der Überlagerung der Abstrahlcharakteristika der jeweiligen

Module im Fernfeld. Das bedeutet, der Abstand zwischen Scheinwerfer und Messschirm ist groß im Vergleich zu den Abmessungen des Scheinwerfers. Die x- und y-Achsen der Figuren 1 bis 7 geben in willkürlichen Einheiten die Ausdehnung der Lichtstärkeverteilung in horizontaler beziehungsweise vertikaler Richtung an. Die Trennlinie 12 bei x = 0 trennt die Verkehrsrichtungen voneinander. Das heißt, im Falle von Rechtsverkehr liegt vom Modul in Richtung Messschirm gesehen links von der Trennlinie 12 die Seite des Gegenverkehrs.

Figur 1 zeigt schematisch die Lichtstärkeverteilung eines ersten Moduls 1 zur Lichterzeugung wie sie sich aus der Projektion der Abstrahlcharakteristik des Moduls 1 auf den Messschirm ergibt. Die Höhenlinien in Figur 1 sind Kurven konstanter Lichtstärke und begrenzen Bereiche (1a bis 1f) unterschiedlicher Lichtstärke. Die maximale Lichtstärke beträgt in diesem Ausführungsbeispiel in etwa 3500 cd. Im Bereich 1a beträgt die Lichtstärke wenigsten 3000 cd, im Bereich 1b wenigstens 1000 cd, im Bereich 1c wenigstens 300 cd, im Bereich 1d wenigstens 100 cd, im Bereich le wenigstens 30 cd und im Bereich 1f wenigstens 10 cd. Das heißt, die Lichtstärke nimmt von der Mitte bei x = 0 zu den Rändern der Lichtstärkeverteilung hin ab. Ein Hell-Dunkel-Übergang 13 erstreckt sich zumindest stellenweise entlang der waagrechten Linie 11 die willkürlich bei y = 0 festgelegt ist. Verglichen mit der Leuchtstärkeverteilung der Module der Figuren 2 bis 4 zeigt das Modul 1 der Figur 1 eine breite, relativ diffuse Leuchtstärkeverteilung als Resultat einer relativ breiten, diffusen Abstrahlcharakteristik. Ein solches Modul 1 kann beispielsweise als Grundbaustein für eine Stadtlichtschaltung des Kfz-Scheinwerfers dienen. Das bedeutet, die Abstrahlcharakteristik des Moduls 1 eignet sich besonders für relativ gut ausgeleuchtete Umgebung bei relativ geringer Geschwindigkeit eines Fahrzeugs. Das heißt beispielsweise, dass der Raum im Vorfeld des Fahrzeugs, also relativ nahe am Fahrzeug, besonders gut ausgeleuchtet ist.

Figur 2 zeigt schematisch die Leuchtstärkeverteilung eines zweiten Moduls 2 zur Lichterzeugung. Die maximale Leuchtstärke beträgt in diesem Ausführungsbeispiel cirka 8000 cd. Die Einteilung der Bereiche 2a bis 2f durch die Höhenlinien entspricht der Einteilung in Figur 1. Im Vergleich zum Modul der Figur 1 zeigt Figur 2 eine weniger breite Leuchtstärkeverteilung. Das heißt, die Leuchtstärke fällt hier bei betragsmäßig kleineren x-Werten beziehungsweise y-Werten auf Werte unter 10 cd ab. Weiter ist die Lichtstärke im Zentrum der Lichtstärkeverteilung (um x = 0, y=-5) konzentrierter. Das heißt, das Gebiet größter Ausleuchtung 2a nimmt eine kleinere Fläche ein. Das Modul 2 zeigt also eine Abstrahlcharakteristik die - verglichen zur Abstrahlcharakteristik des Moduls der Figur 1 - konzentrierter und weniger diffus ist. Modul 2 kann zum Beispiel als Grundbaustein für ein Abblendlicht Verwendung finden.

Figur 3 zeigt schematisch die Leuchtstärkeverteilung eines dritten Moduls 3 zur Lichterzeugung. Bereich 3a bezeichnet das Gebiet der größten Lichtstärke mit einer Lichtstärke von wenigsten 10000 cd. Die maximale Lichtstärke im Ausführungsbeispiel der Figur 3 beträgt cirka 16000 cd. Die Gebiete 3a bis 3f der Lichtstärkeverteilung schließen sich mit Lichtstärken von wenigstens 3000 cd (Gebiet 3b) bis wenigstens 30 cd (Gebiet 3f) an. Verglichen mit der Abstrahlcharakteristik des Moduls der Figur 2 zeigt Modul 3 eine weitere Konzentration der Lichtstärke. Modul 3 kann als Grundbaustein für ein Fernlicht Verwendung finden.

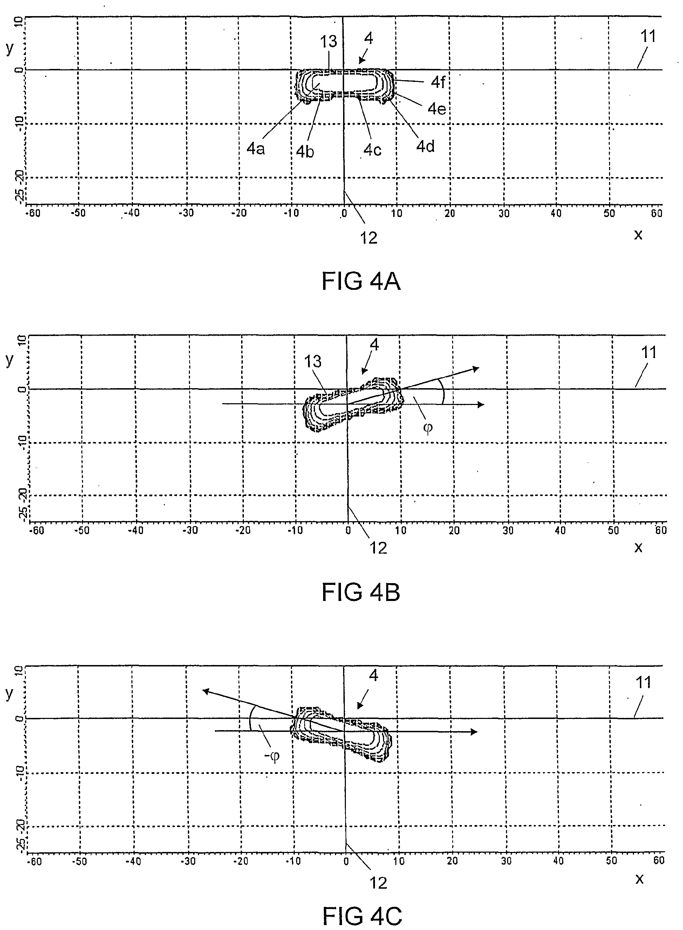

Figur 4A zeigt eine schematische Lichtstärkeverteilung eines vierten Moduls zur Lichterzeugung. Der Bereich 4a bezeichnet den Bereich größter Lichtstärke mit einer Lichtstärke von wenigstens 10000 cd. Die maximale Lichtstärke beträgt in etwa 21000 cd. Die weitere Einteilung der Lichtstärke in den Bereichen 4b bis 4f entspricht der Einteilung in Figur 3. Modul 4 weist eine besonders stark konzentrierte Abstrahlcharakteristik auf. Modul 4 findet daher bevorzugt als so genanntes Hot-Spot-Modul 4 für unterschiedliche Betriebseinstellungen des Scheinwerfers Verwendung.

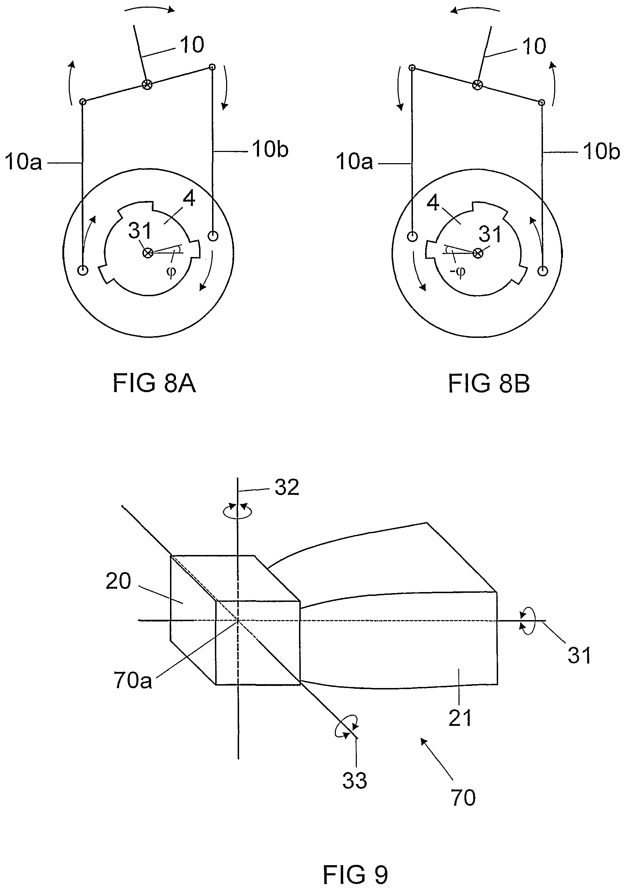

Bevorzugt ist - wie in den Figuren 4B und 4C dargestellt - die Abstrahlcharakteristik des Moduls 4 um eine Längsachse 31 des Moduls (siehe dazu auch Figur 9) drehbar. Das Drehen der Abstrahlcharakteristik kann beispielsweise durch eine Drehung des gesamten Moduls um seine Längsachse 31 erfolgen. Figur 4B zeigt eine Drehung der Abstrahlcharakteristik um einen Winkel +ϕ, Figur 4c zeigt eine Drehung um einen Winkel -ϕ. Beispielsweise kann der Winkel ϕ dabei zum Beispiel 15° betragen.

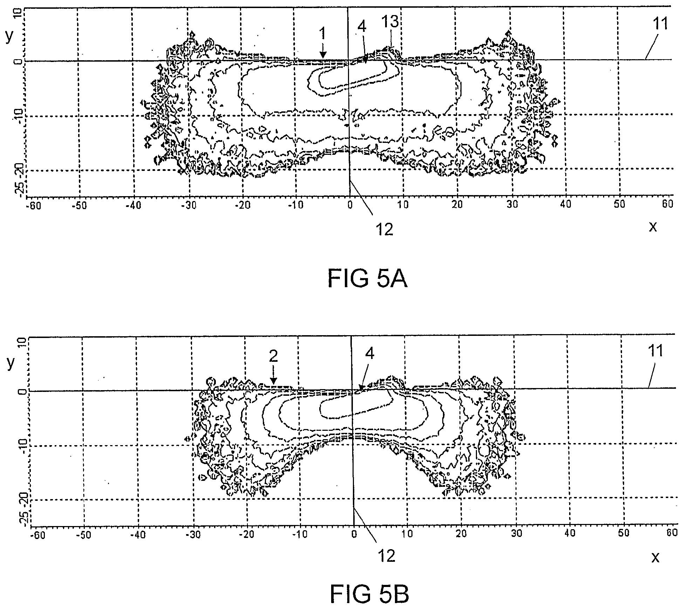

Figur 5A zeigt schematisch die Lichtstärkeverteilung einer Überlagerung der Abstrahlcharakteristika der Module 1 und 4. Das heißt, die Module 1 und 4 erscheinen den Betrachter als gleichzeitig Licht emittierend. Ihre Abstrahlcharakteristika überlagern sich. Dies resultiert auf einen Messschirm in der gezeigten Lichtstärkeverteilung, die eine räumliche Addition der Lichtstärkeverteilungen der Module 1 und 4 darstellt.

Im Ausführungsbeispiel der Figur 5A ist die Abstrahlcharakteristik des Hot-Spot-Moduls 4 beispielsweise um +15° gedreht. Dadurch wird die Abstrahlcharakteristik des Moduls 4 derart der Abstrahlcharakteristik des Moduls 1 überlagert, dass im Fall von Rechtsverkehr auf der Seite des Gegenverkehrs (links von der Trennlinie 12) eine waagrechte Linie des Hell-Dunkel-Übergangs 13 bestehen bleibt. Auf der Verkehrsseite (rechts von der Trennlinie 12) verläuft der Hell-Dunkel-Übergang 13 mit einem Winkel ϕ = 15° zur Waagrechten.

Das bedeutet zusammengefasst, ein asymmetrischer Beitrag zur Lichtverteilung - wie etwa die Abstrahlcharakteristik des Moduls 4 - wird mittels Drehung der Abstrahlcharakteristik relativ zu einer Längsachse 31 des Moduls eingestellt. Die Überlagerung der konzentrierten Abstrahlcharakteristik des Hot-Spot-Moduls 4 mit der breiten, diffusen Abstrahlcharakteristik des Moduls 1 kann insbesondere für einen Stadtlichtbetrieb des Scheinwerfers Verwendung finden.

Figur 5B zeigt schematisch die Lichtstärkeverteilung einer Überlagerung der Abstrahlcharakteristika der Module 2 und 4. Auch in diesem Ausführungsbeispiel ist die Abstrahlcharakteristik des Hot-Spot-Moduls 4 um einen Winkel ϕ zur Waagrechten 11 gedreht. Eine derart modellierte Abstrahlcharakteristik kann beispielsweise als Abblendlicht Verwendung finden.

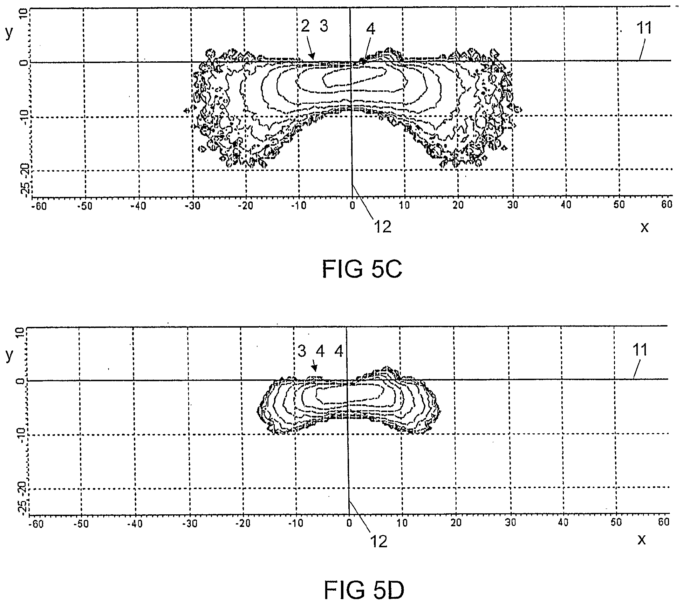

Figur 5C zeigt die Überlagerung der Abstrahlcharakteristika der Module 2, 3 und 4. Verglichen mit der Abstrahlcharakteristik der Figur 5B ist hier die im Vergleich zur Abstrahlcharakteristik des Moduls 2 engere, weniger diffuse Abstrahlcharakteristik des Moduls 3 zusätzlich überlagert. Eine derart zusammengesetzte Abstrahlcharakteristik eignet sich beispielsweise für einen Schlechtwetterbetrieb des Scheinwerfers - zum Beispiel für Fahrten im Regen oder Nebel.

Figur 5D zeigt die Überlagerung der Abstrahlcharakteristik des Moduls 3 mit den Abstrahlcharakteristika von zwei Modulen 4. Die Abstrahlcharakteristika der beiden Module 4 sind dabei jeweils um den Winkel ϕ gedreht. Es resultiert eine besonders konzentrierte Abstrahlcharakteristik mit einer maximalen Lichtstärke von in etwa 55000 cd auf der Projektionsfläche. Die Kombination der Abstrahlcharakteristika der Module 3 und 4 kann zum Beispiel für Autobahnfahrten bei hoher Geschwindigkeit Verwendung finden.

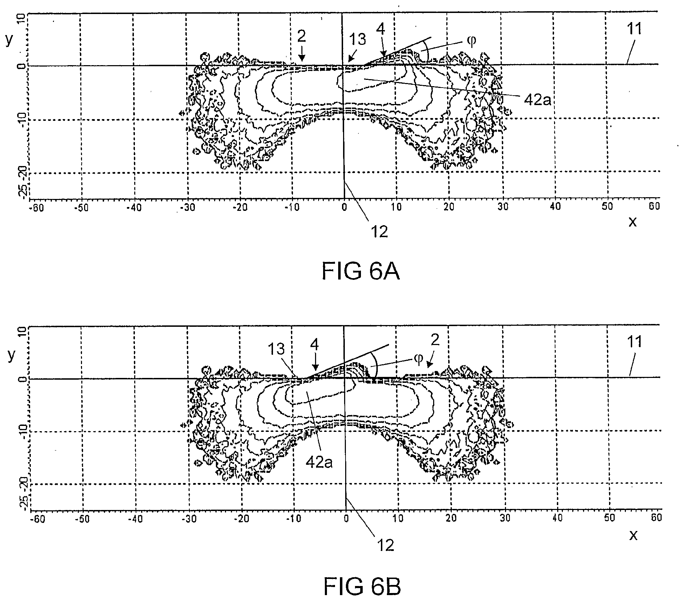

Figuren 6A und 6B zeigen eine Überlagerung der Abstrahlcharakteristika der Module 2 und 4 beispielsweise geeignet als Abblendlicht des Scheinwerfers. Die Abstrahlcharakteristik des Moduls 4 ist in beiden Figuren um die Längsachse 31 des Moduls gedreht, so dass die Hell-Dunkel-Grenze 13 in der Projektion einen Winkel ϕ zur Waagrechten einschließt. Der Drehung um die Längsachse 31 ist eine Drehung der Abstrahlcharakteristik um die Hochachse 32 (vergleiche dazu Figur 9) überlagert. So ist die Abstrahlcharakteristik des Moduls 4 in Figur 6A um 5° nach rechts und in Figur 6B um 5° nach links um die Hochachse 32 gedreht. Die Drehung der Abstrahlcharakteristik um die Hochachse 32 kann beispielsweise durch Drehung des gesamten Moduls oder der Moduloptik bewirkt sein. Der Drehwinkel ist dabei beispielsweise der Krümmung einer Kurve angepasst. Auf diese Weise kann das Gebiet stärkster Ausleuchtung 42a der Krümmung einer Kurve nachgeführt sein. Die Drehung des Moduls erfolgt zum Beispiel mittels eines Schrittmotors, der zumindest mittelbar durch die Lenkbewegung des Fahrzeugs gesteuert ist. Es ist darüber hinaus auch möglich, dass die Abstrahlcharakteristik des Moduls 2 zusammen mit der Abstrahlcharakteristik des Moduls 4 oder getrennt davon um die Hochachse 32 des Moduls gedreht ist und damit ebenfalls der Krümmung der Kurve nachgeführt ist.

Die beschriebene Drehung der Abstrahlcharakteristik -beispielsweise des Hot-Spot-Moduls der Figur 4 - um die Hochachse 32 ist auch für andere Kombinationen von Abstrahlcharakteristika wie sie beispielsweise in den Figuren 5A bis 5D gezeigt sind möglich.

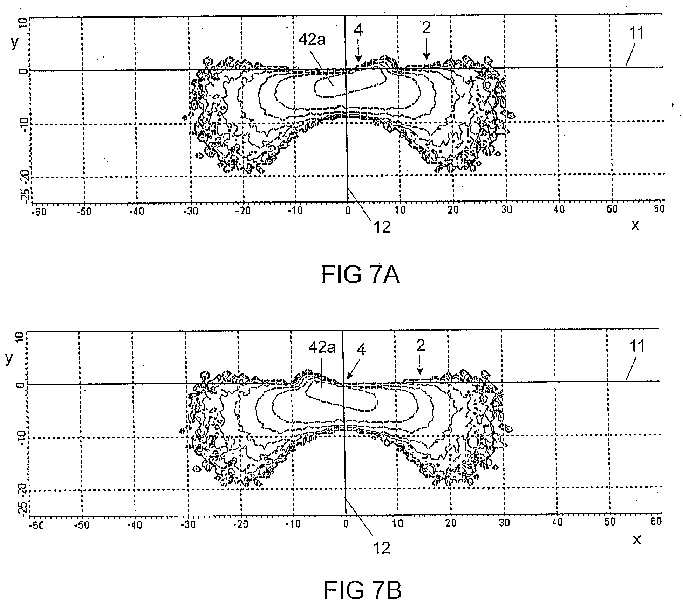

Figuren 7A und 7B zeigen eine Drehung des Hot-Spot-Moduls 4 um die Längsachse 31 des Moduls um einen Winkel von +ϕ beziehungsweise - ϕ. Eine solche Drehung der Abstrahlcharakteristik kann zum Umschalten von Rechts- auf Linksverkehr und umgekehrt eingesetzt werden (so genannte "Touristenschaltung" für den Wechsel vom Links- zum Rechtsverkehr und umgekehrt). Die Drehung der Abstrahlcharakteristik des Hot-Spot-Moduls 4 um die Längsachse 31 zum Umschalten von Rechts- auf Linksverkehr ist auch für weitere Kombinationen von Abstrahlcharakteristika wie sie in den Figuren 5A bis 5D gezeigt sind möglich.

Insgesamt ist eine große Anzahl von Kombinationen der Abstrahlcharakteristika unterschiedlicher Module möglich. Unter Verwendung relativ weniger unterschiedlicher oder gleicher Module und die Bewegung der Abstrahlcharakteristika einzelner oder mehrerer Module können unterschiedliche Abstrahlcharakteristika eines Scheinwerfers realisiert werden. Dadurch kann einer Vielzahl von unterschiedlichen Verkehrssituationen und Fahrbedingungen Rechnung getragen werden. Die Ausführungsbeispiele der Figuren 5 bis 7 sind dabei beispielhaft und keineswegs einschränkend zu verstehen.

Die Figuren 8A und 8B zeigen eine mögliche Realisierung der Drehung der Abstrahlcharakteristik eines Moduls um seine Längsachse 31. Beispielsweise zum in den Figuren 7A und 7B gezeigten Umschalten von Rechtsverkehr auf Linksverkehr kann ein Hebelsystem mit einem Hebel 10 Verwendung finden. Die Drehung eines Moduls um seine Längsachse 31 erfolgt dann mittels mechanischer Betätigung des Hebels. Die mechanische Betätigung des Hebels 10 bewirkt mittels der Hebelarme 10a, 10b eine Drehung beispielsweise des Moduls 4 um seine Längsachse 31. Der Drehwinkel kann stufenlos einstellbar sein. Es ist aber auch möglich, dass mit Betätigung des Hebels 10 das Modul um voreingestellte Winkel gedreht werden kann.

Figur 9 zeigt eine schematische Perspektivskizze eines Moduls zur Lichterzeugung 70. Das Modul 70 enthält eine Lichtquelle 20 und eine Moduloptik 21, die der Lichtquelle 20 nachgeordnet ist. Das Modul 70 ist beispielsweise um drei Hauptachsen 31, 32, 33 drehbar gelagert, die senkrecht zueinander verlaufen und sich beispielsweise im Schwerpunkt 70a des Moduls 70 schneiden. Die Längsachse 31 verläuft bevorzugt parallel zur Hauptabstrahlrichtung des Moduls. Bei nicht gedrehtem Modul verläuft die Längsachse 31 besonders bevorzugt parallel zu einer optischen Achse 61 einer Projektionslinse, die dem Modul nachgeordnet ist (vergleiche dazu Figur 13). Die Hochachse 32 und die Querachse 33 stehen jeweils senkrecht auf der Längsachse 31.

Eine Drehung des Moduls um die Längsachse 31 bewirkt ein Schwenken der Abstrahlcharakteristik des Moduls 70 wie sie für das Hot-Spot-Modul 4 beispielsweise in den Figuren 4B und 4C gezeigt ist. Eine Drehung um die Hochachse 32 bewirkt die in den Figuren 6A und 6B beispielhaft für das Hot-Spot-Modul 4 dargestellte Drehung, die zum Beispiel zum Nachführen der Abstrahlcharakteristik bei Kurvenfahrten geeignet ist. Eine Drehung um die Querachse 33 des Moduls 70 erscheint in der Projektion als Verkippen der Abstrahlcharakteristik nach unten - beispielsweise zu einer Fahrbahn hin - oder nach oben - zum Beispiel von einer Fahrbahn weg gerichtet. Durch Drehung um die Querachse 33 des Moduls kann also auf die Neigung des Fahrzeugs reagiert werden. Neigt sich das Fahrzeug etwa mit seiner Front zur Fahrbahn hin, so kann die Abstrahlcharakteristik des Moduls durch Drehen um die Querachse 33 von der Fahrbahn weggeführt werden, so dass die Hauptabstrahlrichtung des Moduls 70 sich zum Beispiel im wesentlichen parallel zur Fahrbahn erstreckt.

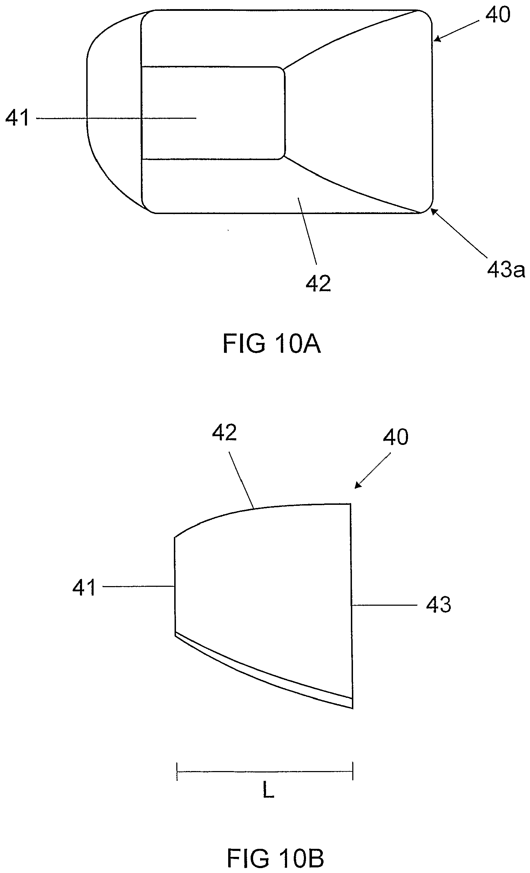

Figur 10A zeigt eine schematische Perspektivskizze eines Ausführungsbeispiels einer Moduloptik 40, wie sie zum Beispiel für ein Hot-Spot-Modul 4 zum Einsatz kommen kann. Die Figur 10B zeigt die dazugehörige schematische Seitenansicht in der Schnittdarstellung.

Bei der gezeigten Moduloptik 40 handelt es sich um einen Reflektor mit einer Länge von etwa 5 mm, der als Moduloptik 21 der Lichtquelle 20 nachgeordnet sein kann (vergleiche Figur 9). Der Reflektor 40 weist eine Lichteintrittsöffnung 41, eine Lichtaustrittsöffnung 43 sowie Seitenflächen 42 auf, die die Lichteintrittsöffnung 41 mit der Lichtaustrittsöffnung 42 verbinden.

Die Lichteintrittsöffnung 41 weist dabei eine kleinere Fläche als die Lichtaustrittsöffnung 42 auf.

Die Seitenflächen 42 sind reflektierend ausgebildet. Beispielsweise sind die Seitenflächen 42 dazu im Inneren des Reflektors 40 reflektierend beschichtet. Es ist aber auch möglich, dass der Reflektor 40 als Vollkörper ausgebildet ist, der beispielsweise ein transparentes Kunststoffmaterial enthält. Reflektionen an den Seitenflächen 42 finden dann aufgrund von Totalreflexion statt. Die Seitenflächen 42 sind zumindest stellenweise - wie im allgemeinen Teil der Beschreibung ausgeführt - nach Art einer CPC-, CEC-, CHC-, Pyramidenstumpf- oder Kegelstumpfoptik ausgebildet. Weiter ist es möglich, dass die Seitenflächen 42 Freiformflächen enthalten, die Krümmungen höherer Ordnung aufweisen können.

Die Seitenflächen 42, die Lichteintrittsöffnung 41 und die Lichtaustrittsöffnung 42 sind derart geformt, dass eine gewünschte Abstrahlcharakteristik des Moduls resultiert. Die Lichtverteilung an der Lichtaustrittsöffnung 43 ist dabei im Wesentlichen durch die Form der Seitenflächen 42 bestimmt. Die Konturen der Lichtverteilung sind im Wesentlichen durch die Form der Umrandung 43a der Lichtaustrittsöffnung 43 bestimmt. Die Lichtverteilung an der Lichtaustrittsöffnung 43 wird beispielsweise mittels einer Projektionslinse 60 (vergleiche Figur 13) projiziert. Die Projektion auf eine ebene Fläche resultiert in Lichtstärkeverteilungen wie sie zum Beispiel in Figuren 1 bis 7 dargestellt sind.

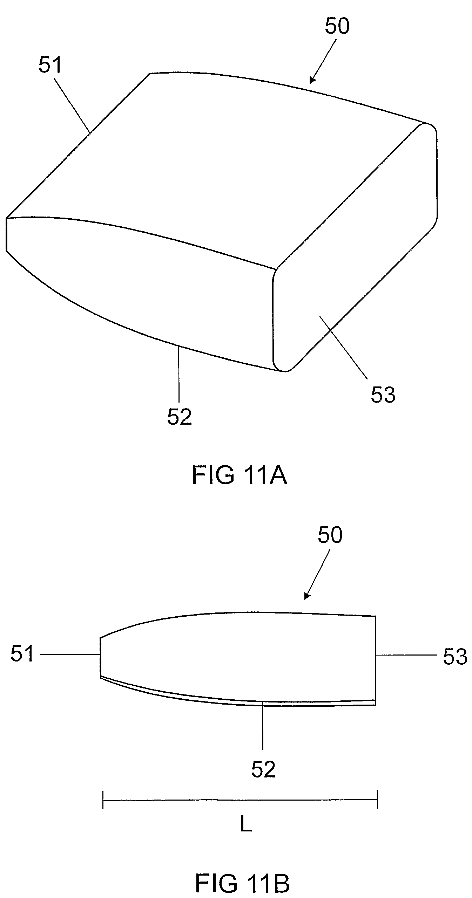

Figur 11A zeigt eine schematische Perspektivskizze eines zweiten Ausführungsbeispiels einer Moduloptik 50. Figur 11B zeigt die dazugehörige Seitenansicht in der Schnittdarstellung. Die dargestellte Moduloptik 50 kann beispielsweise zur Erzeugung einer Lichtstärkeverteilung wie sie in den Figuren 1 bis 3 dargestellt ist dienen. Die Länge L der Moduloptik beträgt in etwa 15 mm. Zum Beispiel ist die Moduloptik 50 als Vollkörper ausgebildet. Beispielsweise enthält die Moduloptik 50 dazu ein transparentes Kunststoffmaterial. Die Moduloptik 50 weist eine Lichteintrittsfläche 51 mit einem kleineren Flächeninhalt als die Lichtaustrittsflächen 53 auf. Seitenflächen 52 verbinden Lichteintrittsfläche 51 und Lichtaustrittsfläche 52. Licht wird in der Moduloptik 50 durch Totalreflektion an den Seitenflächen 52 von der Lichteintrittsöffnung 51 zur Lichtaustrittsöffnung 53 geführt. Es ist aber auch möglich, dass die Moduloptik 50 nicht als Vollkörper ausgebildet ist, sondern die Seitenflächen 52 im Inneren der Moduloptik 50 reflektierend ausgebildet - beispielsweise reflektierend beschichtet sind.

Wie schon im Ausführungsbeispiel der Figuren 10A und 10B kann eine vorgegebene Lichtverteilung auf der Lichtaustrittsfläche 53 im wesentlichen durch die Reflektionen an entsprechend ausgebildeten Seitenflächen 52 erzeugt sein. Die Seitenflächen 52 sind dazu zumindest stellenweise nach Art einer CPC-, CHC-, CEC-, Pyramidenstumpf- oder Kegelstumpfoptik geformt. Weiter ist es möglich, dass die Seitenflächen 52 Bereiche mit Krümmungen höherer Ordnung aufweisen.

In den Ausführungsbeispielen der Figuren 10A, 10B und 11A, 11B ist es zudem möglich, dass die Lichtaustrittsfläche eine definierte Krümmung aufweist. Beispielsweise kann die Lichtaustrittsöffnung eine konvexe Krümmung aufweisen. Die Krümmung der Lichtaustrittsfläche kann dabei so gewählt sein, dass Teile der Lichtaustrittsfläche in der Fokalebene 63 einer Projektionslinse 60 (vergleiche Figur 13) liegen, wohingegen andere Bereiche der Lichtaustrittsfläche nicht in der Fokalebene 63 liegen. Dadurch kann erreicht sein, dass der Hell-Dunkel-Übergang 13 (vergleiche zum Beispiel Figur 1) in der Fokalebene 63 liegt. Es ist dabei auch möglich, dass die Fokalebene 63 nicht wie in Figur 13 vereinfachend dargestellt plan ist, sondern dass die Fokalebene 63 eine Krümmung aufweist. Beispielsweise ist die Fokalebene 63 konvex zur Linse 60 hin gekrümmt. Dies ermöglicht eine besonders scharfe Abbildung des Hell-Dunkel-Übergangs 13. Bereiche der Lichtverteilung auf der Lichtaustrittsfläche, die nicht in der Fokalebene 63 liegen, erscheinen in der Projektion dann mit weicherem Übergang.

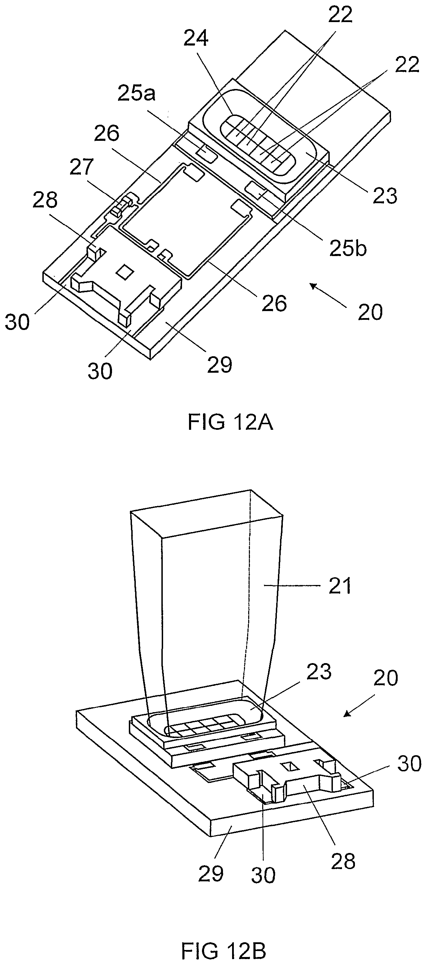

Figur 12A zeigt eine schematische Perspektivskizze eines Ausführungsbeispiels der Lichtquelle 20. Figur 12B zeigt die Lichtquelle 20 mit Moduloptik 21.

Die Lichtquelle 20 umfasst beispielsweise fünf Leuchtdiodenchips 22. Bei den Leuchtdiodenchips 22 handelt es sich zum Beispiel um Dünnfilm-Leuchtdiodenchips 22 mit einer Lichtausbeute von jeweils wenigstens 20 Lumen pro Watt. Bevorzugt sind die Leuchtdiodenchips 22 geeignet Licht im blauen Spektralbereich zu erzeugen. Den Leuchtdiodenchips 22 ist dann ein Lumineszenzkonversionsmaterial nachgeordnet. Der frequenzkonvertierte Anteil der von den Leuchtdiodechips 22 abgegebenen Strahlung mischt sich mit dem nicht-konvertierten Anteil bevorzugt zu weißem Licht.

Die Leuchtdiodenchips 22 sind zum Beispiel am Boden 24 eines Gehäuses 23 angeordnet. Das Gehäuse 23 kann zum Beispiel aus einem keramischen Material gebildet sein. Bevorzugt weist das Gehäuse 23 Innenwände auf, die zumindest stellenweise reflektierend ausgebildet sind. Die Innenwände des Gehäuses 23 können zum Beispiel nach Art eines nicht-abbildenden optischen Konzentrators geformt sein, der in umgekehrter Richtung durchstrahlt wird, so dass eine Kollimation der von den Leuchtdiodenchips 22 emittierten Strahlung resultiert. Den Innenwänden des Gehäuses 23 kann in Hauptabstrahlrichtung der Leuchtdiodenchips 22 eine Moduloptik 21 nachgeordnet sein, wie sie weiter oben beschrieben ist (siehe dazu Figuren 10 und 11).

Die Leuchtdiodenchips 22 sind außerhalb des Gehäuses 23 an den Kontaktflächen 25a und 25b kontaktiert. Leiterbahnen 26 verbinden die Kontaktflächen 25a, 25b mit Anschlussstellen 30, über die die Lichtquelle 20 von außen kontaktiert werden kann. Beispielsweise kann der Anschluss der Lichtquelle an das Stromnetz eines Kraftfahrzeuges mittels eines Steckers am Gegenstecker 28 erfolgen. Zumindest ein Varistor 27 fungiert als Überspannungsschutz der Lichtquelle 20. Gegenstecker 28, Varistor 27 sowie Gehäuse 23 sind zum Beispiel auf einer Metallkernplatine 29 angeordnet, die sowohl als Leiterplatte als auch als Wärmeleitelement für die im Betrieb von den Leuchtdiodenchips 22 erzeugte Wärme fungiert.

Dabei ist es möglich, dass auf der Metallkernplatine 29 oder außerhalb der Lichtquelle 20 eine Vorrichtung zum Dimmen der Leuchtdiodenchips 22 vorgesehen ist. Auf diese Weise kann die Abstrahlcharakteristik des Moduls zusätzlich durch Intensitätsänderung an äußere Bedingungen wie Wetter oder Beleuchtungsverhältnisse angepasst werden. Weiter ist eine Intensitätsänderung des von der Lichtquelle 20 abgestrahlten Lichts auch durch gezieltes Zu- und Abschalten einzelner Leuchtdiodenchips 22 möglich.

Figur 13 zeigt eine schematische Perspektivskizze eines Scheinwerfers 80 mit Modul 70 und Projektionslinse 60. Im nicht-gedrehten Zustand ist das Modul 70 bevorzugt derart zur Projektionslinse 60 angeordnet, dass die Längsachse 31 des Moduls zur optischen Achse 61 parallel verläuft und zumindest Teile der Strahlungsaustrittsfläche 21a der Moduloptik 21 in der Fokalebene 63 der Projektionslinse 60 angeordnet sind.

Die Abstrahlcharakteristik des Moduls 70 ist in einem Bezugssystem, das dem Scheinwerfer 80 zugeordnet ist bewegbar. Dies kann zum Beispiel mittels Bewegung des Moduls 70 relativ zum Scheinwerfer 80 geschehen. Durch Änderung des Abstandes zwischen Strahlungsaustrittsfläche 21a und der Fokalebene 63 der Projektionslinse 60 ist zusätzlich zum Beispiel mittels Bewegung des Moduls 70 entlang einer der Hauptachsen 31, 32, 33 ein Scharfstellen beziehungsweise Weichzeichnen der Projektion der Abstrahlcharakteristik des Moduls 70 oder zumindest Teile der Projektion der Abstrahlcharakteristik möglich.

Die Erfindung ist nicht durch die Beschreibung anhand der Ausführungsbeispiele beschränkt. Beispielsweise kann in dem erfindungsgemäßen Kfz-Scheinwerfer ein, in einem dem Scheinwerfer zugeordneten Bezugssystem beweglich angeordnetes Modul 70 auch zur Erzeugung eines so genannten Kurvenlichts dienen. Beispielsweise kann zu diesem Zweck die räumliche Lage oder Ausrichtung dieses Moduls 70 bzgl. des vorgenannten Bezugssystems beim Durchfahren von Kurven und beim Abbiegen des Fahrzeugs entsprechend dem Einschlagswinkel des Lenkrades verändert werden.

Ferner ist der Einsatz des beschriebenen Scheinwerfers nicht auf Kraftfahrzeuge beschränkt. Vielmehr ist eine Vielzahl von Einsatzmöglichkeiten - zum Beispiel in Flugzeugen oder auch als stationärer Scheinwerfer - gegeben.

## Patentansprüche

1. Kfz-Scheinwerfer mit mindestens zwei Modulen (70) zur Lichterzeugung, wobei
- sich die Abstrahlcharakteristika der mindestens zwei Module (70) zu einer Abstrahlcharakteristik des Kfz-Scheinwerfers überlagern,
- jedes Modul (70) eine Lichtquelle (20), die zumindest vier Leuchtdiodenchips (22) enthält, und eine Moduloptik (21) besitzt, die zumindest stellenweise nach Art eines der folgenden optischen Elemente gebildet ist: CPC-, CEC-, CHC-, Pyramidenstumpf- oder Kegelstumpfoptik, und
- die Moduloptik (21) in Form eines Reflektors (40), der eine Lichteintrittsöffnung (41), eine Lichtaustrittsöffnung (43) und reflektierende Seitenflächen (42) aufweist, welche die Lichteintrittsöffnung (41) mit der Lichtaustrittsöffnung (43) verbinden, oder in Form eines Vollkörpers (50) aus transparentem Kunststoff ausgebildet ist, der eine Lichteintrittsfläche (51), eine Lichtaustrittsfläche (53) und total reflektierende Seitenflächen (52) aufweist, welche die Lichteintrittsfläche (51) mit der Lichtaustrittsfläche (53) verbinden,
- die Lichteintrittsöffnung (41) oder die Lichteintrittsfläche (51) maximal zweimal so groß ist wie die Gesamtstrahlungsauskoppelfläche der Leuchtdiodenchips (22) der Module (70) **dadurch gekennzeichnet, dass** die Abstrahlcharakteristik zumindest eines der Module (70) in einem dem Scheinwerfer (80) zugeordneten Bezugsystem bewegbar ist, wobei das zumindest eine bewegbare Modul (70) um drei zugeordnete Hauptachsen (31, 32,33) drehbar gelagert ist.

2. Kfz-Scheinwerfer nach Anspruch 1, wobei die Moduloptik (21) drehbar gelagert ist.

3. Kfz-Scheinwerfer nach Anspruch 1, wobei die Position der Lichtquelle (20) in Bezug auf die Moduloptik (21), die der Lichtquelle (20) nachgelagert ist, veränderbar ist.

4. Kfz-Scheinwerfer nach Anspruch 1, wobei der Kfz-Scheinwerfer einen Schrittmotor aufweist.

5. Kfz-Scheinwerfer nach Anspruch 1, wobei der Kfz-Scheinwerfer ein Hebelsystem aufweist.

6. Kfz-Scheinwerfer nach Anspruch 1, wobei der Kfz-Scheinwerfer ein optisches Element (60) aufweist, das den Modulen (70) nachgeordnet ist.

7. Kfz-Scheinwerfer nach Anspruch 6, wobei das optische Element eine Projektionslinse (60) umfasst.

8. Kfz-Scheinwerfer nach Anspruch 6, wobei die Position zumindest eines Moduls (70) relativ zum optischen Element (60) veränderbar ist.

9. Kfz-Scheinwerfer nach Anspruch 1, wobei die Lichteintrittsöffnung (41) oder die Lichteintrittsfläche (51) maximal 1,25 mal so groß ist wie die Gesamtstrahlungsauskoppelfläche der Leuchtdiodenchips (22) der Module (70).

## Claims

1. Motor vehicle headlight having at least two modules (70) for generating light, wherein
- the radiation patterns of the at least two modules (70) superpose to form one radiation pattern of the motor vehicle headlight,
- each module (70) has a light source (20), containing at least four light-emitting diode chips (22), and a module optical unit (21), which is formed at least partially in the manner of one of the following optical elements: CPC, CEC, CHC, truncated pyramid or truncated cone optical unit, and
- the module optical unit (21) is embodied in the form of a reflector (40), having a light entry opening (41), a light exit opening (43) and reflective side faces (42) that connect the light entry opening (41) to the light exit opening (43), or in the form of a solid body (50) made from a transparent plastics material, having a light entry face (51), a light exit face (53) and totally internally reflecting side faces (52) that connect the light entry face (51) to the light exit face (53),
- the light entry opening (41) or the light entry face (51) is at most twice as large as the total radiation output coupling face of the light-emitting diode chips (22) of the modules (70), **characterized in that** the radiation pattern of at least one of the modules (70) is movable within a reference system that is assigned to the headlight (80), wherein the at least one movable module (70) is mounted so as to be rotatable about three assigned main axes (31, 32, 33).

2. Motor vehicle headlight according to Claim 1, wherein the module optical unit (21) is mounted so as to be rotatable.

3. Motor vehicle headlight according to Claim 1, wherein the position of the light source (20) with respect to the module optical unit (21), which is arranged downstream of the light source (20), is variable.

4. Motor vehicle headlight according to Claim 1, wherein the motor vehicle headlight has a stepper motor.

5. Motor vehicle headlight according to Claim 1, wherein the motor vehicle headlight has a lever system.

6. Motor vehicle headlight according to Claim 1, wherein the motor vehicle headlight has an optical element (60) that is arranged downstream of the modules (70).

7. Motor vehicle headlight according to Claim 6, wherein the optical element comprises a projection lens (60).

8. Motor vehicle headlight according to Claim 6, wherein the position of at least one module (70) is variable relative to the optical element (60).

9. Motor vehicle headlight according to Claim 1, wherein the light entry opening (41) or the light entry face (51) is at most 1.25 times as large as the total radiation output coupling face of the light-emitting diode chips (22) of the modules (70).

## Revendications

1. Phare de véhicule avec au moins deux modules (70) destinés à la génération de lumière, dans lequel
- les caractéristiques de rayonnement des au moins deux modules (70) se superposent à une caractéristique de rayonnement du phare de véhicule,
- chaque module (70) possède une source de lumière (20) qui contient au moins quatre puces de diode électroluminescente (22) et une optique de module (21) qui est formée au moins par endroits selon un type d'un des éléments optiques suivants : optique CPC, CEC, CHC, en tronc de pyramide ou en tronc de cône, et
- l'optique de module (21) est réalisée en forme de réflecteur (40) qui présente une ouverture d'entrée de lumière (41), une ouverture de sortie de lumière (43) et des surfaces latérales réfléchissantes (42) qui relient l'ouverture d'entrée de lumière (41) avec l'ouverture de sortie de lumière (43) ou en forme de corps plein (50) en matière plastique transparente qui présente une surface d'entrée de lumière (51), une surface de sortie de lumière (53) et des surfaces latérales totalement réfléchissantes (52), qui relient la surface d'entrée de lumière (51) avec la surface de sortie de lumière (53),
- l'ouverture d'entrée de lumière (41) ou la surface d'entrée de lumière (51) est au maximum grande comme deux fois la surface de découplage de rayonnement global de la puce de diode électroluminescente (22) des modules (70), **caractérisé en ce que** la caractéristique de rayonnement d'au moins un des modules (70) est mobile dans un système de référence associé au phare (80), dans lequel l'au moins un module mobile (70) est monté de manière rotative autour de trois axes principaux associés (31, 32, 33).

2. Phare de véhicule selon la revendication 1, dans lequel l'optique de module (21) est montée de manière rotative.

3. Phare de véhicule selon la revendication 1, dans lequel la position de la source de lumière (20) est modifiable en ce qui concerne l'optique de module (21) qui est montée en aval de la source de lumière (20).

4. Phare de véhicule selon la revendication 1, dans lequel le phare de véhicule présente un moteur pas-à-pas.

5. Phare de véhicule selon la revendication 1, dans lequel le phare de véhicule présente un système de levier.

6. Phare de véhicule selon la revendication 1, dans lequel le phare de véhicule présente un élément optique (60) qui est disposé en aval des modules (70).

7. Phare de véhicule selon la revendication 6, dans lequel l'élément optique comprend une lentille de projection (60).

8. Phare de véhicule selon la revendication 6, dans lequel la position d'au moins un module (70) est modifiable par rapport à l'élément optique (60).

9. Phare de véhicule selon la revendication 1, dans lequel l'ouverture d'entrée de lumière (41) ou la surface d'entrée de lumière (51) est au maximum grande comme 1,25 fois la surface de découplage de rayonnement global de la puce de diode électroluminescente (22) des modules (70).
